# NEUE EUROPÄISCHE PATENTSCHRIFT

(11) **EP 2 772 886 B2**
(45) Veröffentlichungstag und Bekanntmachung des Hinweises auf die Entscheidung über den Einspruch: **06.12.2023**
(45) Hinweis auf die Patenterteilung: 01.04.2015
(21) Anmeldenummer: 13157236.4
(22) Anmeldetag: 28.02.2013
(51) Int. Cl.: G06F 11/30, G07B 15/06, H04L 12/403, G07C 5/00, G05B 19/042, G01M 17/00, G05B 19/418, H04L 12/40

(54) **Elektronisches Fahrzeug-Bordsystem und Prüfverfahren hierfür**
Electronic onboard vehicle system and inspection method for same
Système de tableau de bord électronique de véhicule et procédé de contrôle correspondant

(43) Veröffentlichungstag der Anmeldung: 03.09.2014
(73) Patentinhaber: Kapsch TrafficCom AG, 1120 Wien (AT)
(72) Erfinder: Kersten, Jan, 71570 Oppenweiler (DE); Tijink, Jasja, 2384 Breitenfurt (AT); Nagy, Oliver, 1190 Wien (AT)
(74) Vertreter: Weiser & Voith Patentanwälte Partnerschaft

(56) Entgegenhaltungen:
- EP-A1- 1 574 864
- DE-A1- 10 026 918
- DE-A1-102004 023 128
- DE-A1-102005 001 390
- DE-A1-102005 048 351
- DE-A1-102008 048 162
- Produktbeschreibung ?Kvaser Eagle User's Guide? download von:http://www.kvaser.com'software/7330130 98090/ V1_0_0/UG_98090_kvaser_eagle_userguide.pdf Publiziert zwischen September 2011 und Juni 2012
- W. Zimmermann et al.: ?Bussysteme in der Fahrzeugtechnik, Protokolle und Standards, 3. Auflage", September 2008 (2008-09), Vieweg und Teubner Verlag ISBN: 978-3-8448-0447-1, Seite IX-XIII, 1-25, 364-367

## Beschreibung

Die vorliegende Erfindung betrifft ein Verfahren zum Prüfen eines elektronischens Fahrzeug-Bordsystems mit einer Mehrzahl von Modulen, welche über einen Kommunikationsbus miteinander in Verbindung stehen und eindeutig adressierbar sind.

Wurden elektronische Fahrzeug-Bordsysteme zunächst vor allem zum Motormanagement eingesetzt, so übernehmen sie in heutigen Fahrzeugen viele weitere Applikationen sehr unterschiedlicher Komplexität; dazu gehören Sicherheitsapplikationen, z.B. Bremsassistenz oder Airbag-Steuerung, Komfortapplikationen, z.B. Temperatur- und Klimaregelung oder Navigation, und ebenso Unterhaltungsapplikationen, z.B. Musik- und Videosteuerung oder Zugang zu Internet-Diensten, aber auch einfache Applikationen, wie die eines Fenster- oder Türöffners. Diese Applikationen sind im Allgemeinen als separate Module an einen gemeinsamen Kommunikationsbus angeschlossen. Darüber greifen sie auf andere angeschlossene Module zu, die diesen zugeordnete Dienste ausführen. Beispielsweise greift ein Applikationsmodul für die Klimaregelung auf ein Dienstmodul mit Temperatursensor zu, welches eine Antwort - hier den gemessenen Temperaturwert - retourniert.

Trotz der Leistungsfähigkeit heutiger Fahrzeug-Bordsysteme werden weiterhin viele komplexe Applikationen, z.B. eine Vermautungsapplikation für ein Straßenmautsystem, bis heute als separate Geräte in Fahrzeuge eingebaut, ohne an das Fahrzeug-Bordsystem angeschlossen zu sein. Gründe dafür sind die hohe zusätzliche Belastung des Kommunikationsbusses bestehender Fahrzeug-Bordsysteme durch weitere Module und der zusätzliche Validierungs- und Zertifizierungsaufwand, wenn z.B. eine Vermautungsapplikation mit all ihren - oft von Fremdherstellern produzierten und betreiberspezifische zertifizierten - Dienstmodulen an das Fahrzeug-Bordsystem angeschlossen werden soll.

Die Schrift DE 10 2008 048 162 A1 beschreibt eine Onboard-Unit, die Dienstmodule und Applikationsmodule über einen Kommunikationsbus koppelt. Ein Dienstmodul kann hier von mehreren Applikationsmodulen gemeinsam genutzt werden.

Die Schrift DE 100 26 918 A1 beschreibt einen Netzwerkadapter, der ein zweites Netzwerk an das Fahrzeug-Bordsystem koppelt, indem er den Kommunikationsbus passiv aufzeichnet und dem zweiten Netzwerk anhand seiner Aufzeichnungen einen Zugriff auf das Fahrzeug-Bordsystem vortäuscht.

Die Schrift EP 1 574 864 A1 beschreibt ein Prüfsystem für Komponenten an einem Fahrzeug-Bordsystem. Hierbei wird eine Referenzfahrt mit einem Referenzfahrzeug durchgeführt. Die Funktionsfähigkeit eines zu prüfendes Fahrzeug wird anschließend anhand der vorab gesammelten Referenzdaten geprüft.

Die Erfindung setzt sich zum Ziel, erstmals ein elektronisches Fahrzeug-Bordsystem mit integrierter Vermautungsapplikation und einem Aufzeichnungsmodul zu schaffen, welches mit hoher Effizienz arbeitet und einfach verifizier- und zertifizierbar ist.

Dieses Ziel wird gemäß einem ersten Aspekt der Erfindung mit einem Verfahren gemäß Anspruch 1 erreicht.

Durch das Modularisieren von Diensten in einzelne Dienstmodule und das gemeinsame Verwenden einzelner Dienstmodule durch mehrere Applikationsmodule steigt die Effizienz des Fahrzeug-Bordsystems: Doppelgleisigkeiten werden vermieden, die Anzahl der Module steigt bei zusätzlichen Applikationen nur wenig, ebensowenig wie die Belastung des Kommunikationsbusses, da Redundanzen von Diensten vermieden werden. Auf diese Weise können auch komplexe Applikationsmodule, wie sie eine Vermautungsapplikation erfordert, sehr effizient in ein elektronisches Fahrzeug-Bordsystem eingebunden werden.

Die erfindungsgemäße Aufzeichnung schafft die Möglichkeit, Abläufe im Fahrzeug-Bordsystem später nachzuvollziehen und so die korrekte Funktion der Vermautungsapplikation und der von ihr in Anspruch genommenen Dienstmodule zu überprüfen bzw. im Fall eines Fehlers nach dessen Ursachen zu suchen. Dies erleichtert die Nachvollziehbarkeit der Abläufe im Fahrzeug-Bordsystem während des Fahrzeugbetriebs, insbesondere wenn Module unterschiedlicher Hersteller im Fahrzeug-Bordsystem eingesetzt werden.

Um eine Vermautungsapplikation nach dem DSRC-Standard (Dedicated Short Range Communication) ausführen zu können, ist es vorteilhaft, wenn eines der einen Kommunikationsdienst enthaltenden Dienstmodule ein DSRC-Sendeempfänger ist. Es können auch weitere Kommunikationsdienste zur Verfügung gestellt werden. So ist bevorzugt eines der einen Kommunikationsdienst enthaltenden Dienstmodule ein Mobilfunk-Sendeempfänger. Dadurch wird beispielsweise sowohl der Navigationsapplikation ein Fernzugriff auf aktuelle Straßenzustands-Daten bzw. neue Straßenkarten als auch der Vermautungsapplikation ein Absetzen der von ihr ermittelten Mautdaten an ein zentrales Straßenmautsystem ermöglicht. Sogar ein Wechsel auf einen neuen DSRC- und/oder Mobilfunk-Standard, z.B. mit höherer Bandbreite, erfordert keinen Austausch der Applikationsmodule für die Vermautungs- bzw. die Navigationsapplikation; hingegen profitieren beide Applikationsmodule von einem Wechsel des DSRC-Dienstmoduls oder des Mobilfunk-Dienstmoduls.

Eine weitere bevorzugte Ausführungsform des verwendungsgemäßen Fahrzeug-Bordsystem besteht darin, dass ein weiteres Dienstmodul einen Ortungsdienst enthält, um ortsabhängigen Vermautungsapplikationen entsprechende Verortungsdienste bereitstellen zu können.

Günstig ist es, wenn ein weiteres Dienstmodul einen Kartenabgleichsdienst enthält. Ein solcher Kartenabgleichsdienst gleicht eine beispielsweise mit dem Ortungsdienst eines weiteren Dienstmoduls ermittelte Fahrzeugposition mit einer z.B. in einem Kartenspeicher des Dienstmoduls gespeicherten Karte eines Straßennetzes ab, um auf diese Weise das Fahrzeug im Straßennetz besser zu lokalisieren. Einen solchen hochkomplexen und rechenintensiven Dienst können sich die Vermautungs- und die Navigationsapplikation teilen, weshalb eine solche Modularisierung die Effizienz des Fahrzeug-Bordsystems steigert.

Vorteilhaft ist es, wenn ein weiteres Dienstmodul einen Bezahldienst enthält. Ein solcher Bezahldienst, mit dem eine Identifikation bzw. Authentisierung des Fahrzeug-Bordsystems einhergehen kann, ist nicht nur für die Vermautungs- und Navigationsapplikation verwendbar, sondern auch für Applikationen, welche beispielsweise Zugang zum Internet und dort angebotenen Online-Diensten ermöglichen.

Das Aufzeichnungsmodul ist direkt an den Kommunikationsbus angeschlossen und kann die genannten Anforderungs- und Antwortnachrichten auf dem Kommunikationsbus detektieren und dabei erfassen.

Bevorzugt ist das Aufzeichnungsmodul dazu ausgebildet, die Aufzeichnungen mit einer Signatur zu versehen. So ist die Authentizität jeder einzelnen Aufzeichnung nachvollziehbar. Eine Änderung einer Aufzeichnungen durch Dritte ist nicht unbemerkt möglich. Um die Aufzeichnungen zusätzlich vor dem Zugriff durch Unbefugte und vor Manipulation zu sichern, ist es besonders günstig, wenn das Aufzeichnungsmodul und/oder sein Speicher kryptographisch und/oder physisch zugangsgesichert sind.

Die Vermautungsapplikation und die von ihr adressierten Dienstmodule werden gemäß dem ersten Aspekt einer einfachen, raschen Prüfung unterzogen. Abweichungen ein- zelner Dienstmodule von einem vorgegebenen Verhal- ten können dabei rasch erkannt werden. Das Prüfverfah- ren ist nicht auf eine Durchführung in der Werkstatt be- schränkt, da der Speicher des Aufzeichnungsmoduls
z.B. über einen Kommunikationsdienst des Fahrzeug-Bordsystems - sogar während des Fahrzeugbetriebs ("on the fly") - ausgelesen werden kann. Je nach geprüften Modulen bzw. Abweichung vom vorgegebenen Grenzwert können dabei unterschiedliche Folgemaßnahmen eingeleitet werden. So können bei einer den Grenzwert überschreitenden Abweichung Fahrer bzw. Fahrzeugbetreiber, eine Werkstatt und/oder der Betreiber des Straßenmautsystems informiert oder gewarnt werden, z.B. zur weiteren Sperrung eines Nutzervertrags. Auch kann ein Modul deaktiviert werden, um eine Störung des gesamten Fahrzeug-Bordsystems zu vermeiden.

In einem weiteren Aspekt betrifft die Erfindung ein Verfahren gemäß Anspruch 2.

Das Prüfsystem führt gemäß dem zweiten Aspekt eine sehr genaue Prüfung des Dienstmoduls mithilfe seines - z.B. in einer zertifizierten Umgebung manipulationssicher laufenden - Referenz-Dienstmoduls durch. Ebenso wie das vorgenannte Verfahren kann es "on the fly" durchgeführt werden, um das Fahrzeug-Bordsystem oder einzelne seiner Komponenten zu validieren bzw. zu zertifizieren, oder um Informations- bzw. Warnmeldungen zu erzeugen. Wieder ist als weitere Reaktion auf ein ungenügendes Vergleichsergebnis eine Deaktivierung einzelner Dienstmodule oder sogar Applikationsmodule oder eine Änderung in der Priorisierung von Diensten bzw. Applikationen möglich.

Besonders bevorzugt werden das oben genannte Prüfergebnis und das oben genannte Vergleichsergebnis zu einem Bewertungsergebnis verknüpft. Ein solches Ergebnis einer doppelten Prüfung erlaubt die laufende und/oder nachträgliche Validierung, Zertifizierung bzw. Re-Zertifizierung von Modulen, u.zw. auch während des Betriebs des Fahrzeug-Bordsystems. Das ist insbesondere in jenem Fall günstig, wenn das Fahrzeug-Boardsystem verschiedene Module z.B. unterschiedlicher Hersteller umfasst und/oder bei Austausch oder Ergänzung einzelner Module.

Besonders bevorzugt wird ferner die Signatur der aus dem Speicher ausgelesenen Anforderungs- und Antwortnachrichten auf Echtheit geprüft, um die Authentizität der Aufzeichnung sicherstellen zu können. So können die Verfahren auf Basis derselben, von nur einem Modul aufgezeichneten, authentisierten und manipulationsgeschützten Aufzeichnungen z.B. von den Modul-Herstellern, dem Fahrzeughersteller sowie von Betreibern externer Dienstleistungen, z.B. Straßenmautbetreiber, parallel zu Prüfungszwecken verwendet werden, insbesondere wenn das Aufzeichnungsmodul und/oder sein Speicher zusätzlich kryptographisch und/oder physisch zugangsgesichert sind. Zeichnet das Aufzeichnungsmodul auch Nachrichten anderer Module auf, so kann der Einsatz weiterer Aufzeichnungsmodule im Fahrzeug-Bordsystem unterbleiben. Das Fahrzeug-Bordsystem ist damit einfacher im Aufbau und effizienter und energiesparender im Betrieb.

Das Auslesen des Speicherinhalts in das Prüfsystem kann sowohl durch ein physisches Entnehmen des Speichers und/oder des Aufzeichnungsmoduls aus dem Fahrzeug-Bordsystem als auch durch ein datentechnisches Anbinden erfolgen, sowohl drahtgebunden als auch drahtlos. Bevorzugt erfolgt das genannte Auslesen des Speicherinhalts durch drahtloses Senden des Speicherinhalts vom Fahrzeug-Bordsystem an das Prüfsystem, beispielsweise mithilfe eines der Kommunikationsdienstmodule des Fahrzeug-Bordsystems.

Die Erfindung wird nachfolgend anhand von in den beigeschlossenen Zeichnung dargestellten Ausführungsbeispielen näher erläutert. In den Zeichnungen zeigen:
Fig. 1 ein Fahrzeug mit einem elektronischen Fahrzeug-Bordsystem in Kommunikation mit externen Komponenten in einem schematischen Blockschaltbild;
die Fig. 2a bis 2i das Zusammenwirken verschiedener Module des Fahrzeug-Bordsystems von Fig. 1 in ausschnittsweisen Blockschaltbildern; und
Fig. 3 ein Flussdiagramm eines erfindungsgemäßen Verfahrens zum Prüfen des Fahrzeug-Bordsystems der Fig. 1 und 2.

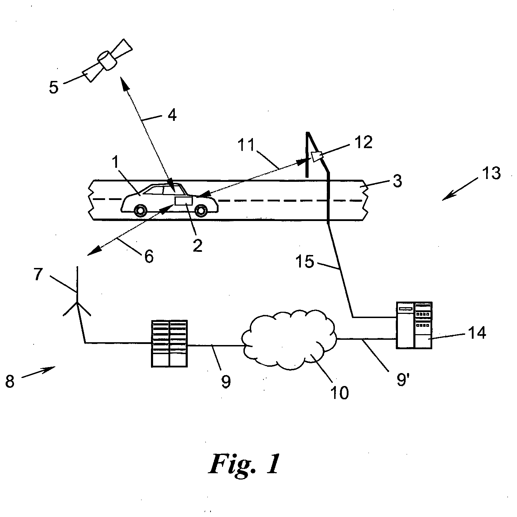

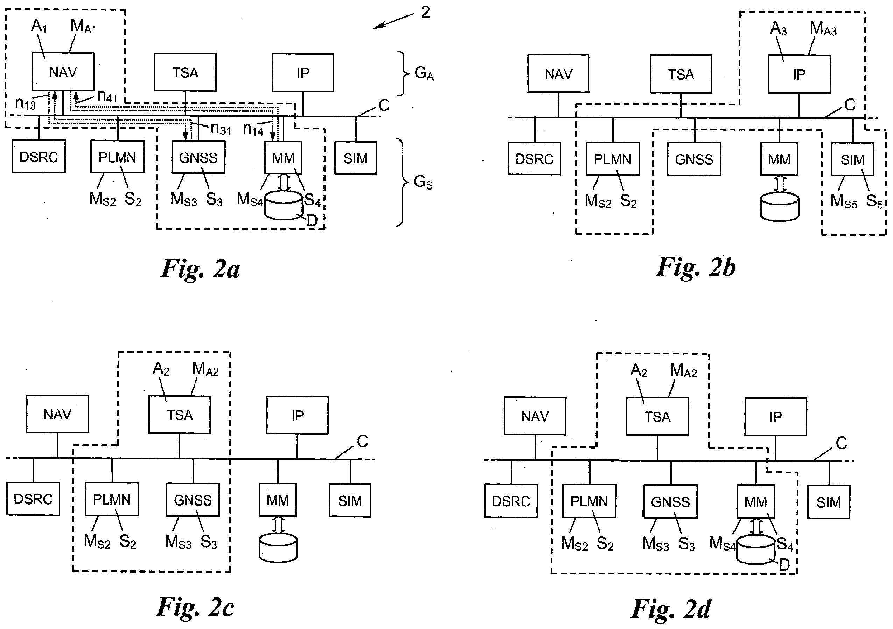

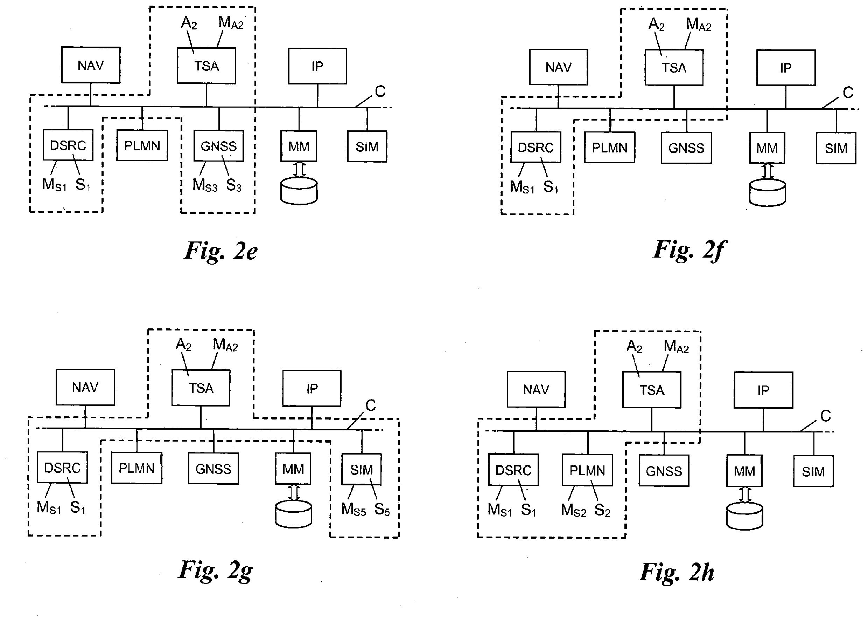

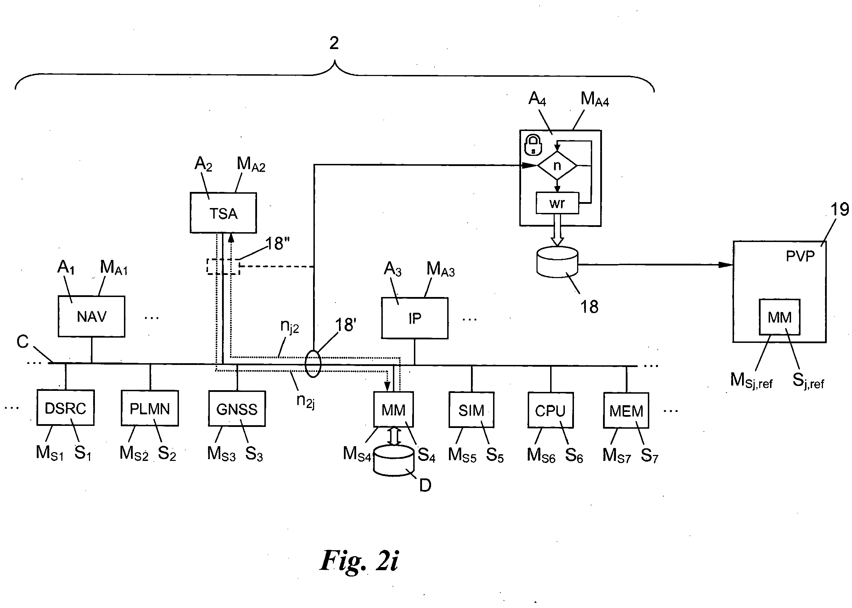

Gemäß Fig. 1 fährt ein Fahrzeug 1 mit einem elektronischen Fahrzeug-Bordsystem 2 (Onboard Electronic System, OES) auf einer Straße 3. Das Fahrzeug-Bordsystem 2 führt unterschiedliche Applikationen und Dienste aus, wie später noch anhand von Fig. 2 näher erläutert wird. Beispielsweise steht es in Satelliten-Funkverbindung 4 mit Satelliten 5 eines globalen Satellitennavigationssystems (Global Navigation Satellite System, GNSS), um seine Position zu ermitteln. Ebenso kommuniziert das Fahrzeug-Bordsystem 2 im Beispiel von Fig. 1 über eine Mobilfunkverbindung 6 mit einer von vielen Basisstationen 7 eines Mobilfunknetzes 8 (Public Land Mobile Network, PLMN), welches auch eine Datenverbindung 9 zu einem globalen Datennetzwerk wie dem Internet 10 aufbauen kann.

Ferner steht das Fahrzeug-Bordsystem 2 nach Fig. 1 auch in Kurzreichweiten-Funkverbindung 11 mit einer Funkbake 12 eines Straßenmautsystems 13. Das Straßenmautsystem 13 vergebührt (vermautet) die Benutzung mautpflichtiger Bereiche der Straße 3, z.B. Mautstraßen oder Parkplätze, durch Fahrzeuge 1. Es umfasst dazu eine Vielzahl solcher straßenseitigen Funkbaken 12. Die Kommunikation über die Funkverbindungen 11 erfolgt dabei bevorzugt nach dem DSRC- oder dem WAVE-Standard (Dedicated Short Range Communication bzw. Wireless Access in Vehicular Environments), oder auch ITS-G5, RFID- oder Infrarot-Kommunikation, im einfachsten Fall WLAN oder Bluetooth. Aufgrund des bekannten Orts der Funkbaken 12 und der begrenzten Reichweiten ihrer Funkverbindungen 11 können die Fahrzeug-Bordsysteme 2 lokalisiert und so die Benützung der Straße 3 vergebührt werden. Zu diesem Zweck steht jede Funkbake 12 mit einem Zentralsystem 14 des Straßenmautsystems 13 in Datenverbindung (15).

Das Zentralsystem 14 des Straßenmautsystems 13 kann über eine weitere Datenverbindung 9' mit dem globalen Datennetzwerk 10 verbunden sein und so, wenn gewünscht, über das Mobilfunknetz 8 mit dem Fahrzeug-Bordsystem 2 Informationen austauschen. Auch kann das Mobilfunknetz 8 direkt mit der Zentrale 14 in Verbindung stehen.

Wie in den Fig. 2a bis 2i gezeigt, ist das Fahrzeug-Bordsystems 2 modular aufgebaut: Es umfasst eine erste Gruppe G_{A} von Applikationsmodulen M_{A1}, M_{A2},..., allgemein M_{Ai}, welche jeweils unterschiedliche Applikationen A₁, A₂,..., allgemein Aᵢ, ausführen; und eine zweite Gruppe G_{S} von Dienstmodulen M_{S1}, M_{S2},..., allgemein M_{Sj}, die jeweils unterschiedliche Dienste S₁, S₂,..., allgemein Sⱼ, ausführen. Die Module M_{Ai}, M_{Sj} stehen über einen Kommunikationsbus C des Fahrzeug-Bordsystems 2 miteinander in Kommunikationsverbindung. Jedes Modul M_{Ai}, M_{Sj} hat am Kommunikationsbus C eine eindeutige Busadresse, anhand welcher es individuell adressierbar ist.

Der Kommunikationsbus C kann ein CAN-Bus sein oder ein anderer, in einem Fahrzeug eingesetzter Kommunikationsbus, z.B. ein Flexray^{™}-Feldbus. Jedes Applikationsmodul M_{Ai} bzw. seine Applikation Aᵢ greift, wenn nötig, auf ein oder mehrere Dienstmodule M_{Sj} und den darin jeweils aufgeführten Dienst Sⱼ zu; und umgekehrt kann jedes Dienstmodul M_{Sj} seinen Dienst Sⱼ einem oder mehreren Applikationsmodulen M_{Ai} auf Anforderung zur Verfügung stellen.

Die von den Dienstmodulen M_{Sj} angebotenen Dienste Sⱼ können beliebiger Art sein, z.B. ein Rechendienst S₆, wie er von einem Prozessor (CPU) oder Grafikprozessor (GPU) angeboten wird, ein Speicherdienst S₇, wie er von einem Speicherbaustein (MEM) bereitgestellt wird, fahrzeugbezogene Dienste, die von fahrzeugspezifischen Komponenten wie dem Armaturenbrett, Zündschloss-, Brems- oder Motormanagementsystemen bereitgestellt werden od.dgl.

Beispielsweise könnte ein "Zündschloss"-Dienstmodul M_{Sj} Informationen über die Zündfreigabe (Zündschlüsselstellung) des Fahrzeugs liefern, ein "Tachometer"-Dienstmodul M_{Sj} Geschwindigkeitsmesswerte des Fahrzeugs bereitstellen, ein "Uhr"-Dienstmodul M_{Sj} Takt- oder Zeitdaten liefern, ein mit dem Bremssystems des Fahrzeugs verknüpftes Dienstmodul M_{Sj} Beschleunigungs- und Bremsmesswerte liefern, z.B. von Beschleunigungssensoren, ein mit dem Motor-Management (Engine Control Unit, ECU; Full Authority Digital Engine Control, FADEC) verknüpftes Motor-Dienstmodul M_{Sj} Motor- oder Abgasmessdaten (z.B. von einer Lambda-Sonde)zur Verfügung stellen oder Motorsteuerdaten verändern lassen, usw. usf.

In dem Beispiel von Fig. 2a sendet ein Applikationsmodul M_{A1} mit einer Navigationsapplikation (Navigation, NAV) A₁ eine Anforderungsnachricht n₁₃ zur Ausführung eines Satelliten-Ortungsdienstes (GNSS) S₃ über den Kommunikationsbus C an ein diesen Dienst S₃ bereitstellendes Dienstmodul M_{S3}. Nach Ausführung des Ortungsdienstes S₃, d.h. nach Feststellung der Position, sendet das Dienstmodul M_{S3} eine Antwortnachricht n₃₁ über den Kommunikationsbus C zurück an das anfordernde Applikationsmodul M_{A1}. Die Anforderungsnachricht n₁₃ enthält neben dem Befehl zur Dienstausführung, welcher auch entsprechende Parameter- und Datenübergabe, Befehlslisten, Prüfsummen usw. inkludieren kann, die Busadressen des sendenden Applikationsmoduls M_{A1} und des ausgewählten Dienstmoduls M_{S3}, für welches die Nachricht n₁₃ bestimmt ist. Die Antwortnachricht n₃₁ enthält wiederum die Busadressen der beiden Module M_{S3}, M_{A1} und ferner Ergebnisparameter des Ortungsdienstes S₃ zur weiteren Verwendung in der Navigationsapplikation A₁, Die Ergebnisparameter können beispielsweise auch Berichte über die Art und Qualität der Abarbeitung des Dienstes enthalten, z.B. die Größe des dafür genutzten Speichers, die Anzahl der dafür genutzten Recheneinheiten (CPUs), die Genauigkeit eines Ortungsergebnisses, Leistungsreports in Form von MIPS (million instructions per second) als Indikator über die genutzte CPU Leistung, usw. usf.

Gegebenenfalls kann eine Anforderungsnachricht nᵢⱼ neben den genannten Busadressen auch Parameter zur Verwendung im ausgewählten Dienst Sⱼ enthalten, z.B. Ortsdaten für einen Kartenabgleichsdienst S₄, wie weiter unten erläutert. Ebenso kann eine Antwortnachricht nⱼᵢ neben den genannten Busadressen auch lediglich eine Bestätigung der Ausführung des Dienstes Sⱼ sein, z.B. die Bestätigung, dass der Mobilfunk-Kommunikationsdienst S₂ erfolgreich Daten an das Mobilfunknetz 8 abgesendet hat, ohne weitere Ergebnisparameter zu enthalten.

Die Fig. 2a bis 2i zeigen das Zusammenwirken verschiedener Dienstmodule M_{Sj} mit verschiedenen Applikationsmodulen M_{Ai}, wobei sich Applikationsmodule M_{Ai} jeweils Dienstmodule M_{Sj} teilen, d.h. diese gemeinsam verwenden, um die Anzahl an Modulen M_{Ai}, M_{Sj} und damit die Komplexität des Fahrzeug-Bordsystems 2 zu minimieren. Die Fig. 2a bis 2i zeigen dabei jeweils ein anderes Szenario bzw. eine andere Funktion des Fahrzeug-Bordsystems 2, für welche die durch die strichlierten Linien zusammengefassten Module jeweils ein anderes physisches oder virtuelles Gerät bilden.

Fig. 2a zeigt den Einsatz des Fahrzeug-Bordsystems 2 als Navigationsgerät, z.B. GPS-Empfänger mit Kartendarstellung. Gemäß Fig. 2a fordert eine Navigationsapplikation A₁ einen Kartenabgleichsdienst S₄ ("map matching", MM) eines Dienstmoduls M_{S4} an, indem sie an das Dienstmodul M_{S4} eine Anforderungsnachricht n₁₄ adressiert, welche die zuvor vom Ortungsdienst S₃ ermittelten (siehe Anforderungsnachricht n₁₃ und Antwortnachricht n₃₁) Ortsparameter enthält. Anhand dieser Ortsparameter nimmt der Kartenabgleichsdienst S₄ einen Vergleich mit einer in einem Speicher D des Dienstmoduls M_{S4} hinterlegten digitalen Karte eines Straßennetzes vor und verbessert dadurch die Genauigkeit der im Ortungsdienst S₃ ermittelte Position des Fahrzeug-Bordsystems 2 bzw. des Fahrzeugs 1 im Straßennetz 3. Die Navigationsapplikation A₁ kann dann anhand der in der zugehörigen Antwortnachricht n₄₁ übersandten Ergebnisse dem Fahrer seine aktuelle Fahrzeugposition bzw. Vorschläge für die weitere Fahrstrecke anzeigen.

Die Navigationsapplikation A₁ könnte überdies auf ein Mobilfunk-Kommunikationsmodul M_{S2} - im vorliegenden Beispiel einen Mobilfunk-Sendeempfänger (PLMN) - zugreifen, um z.B. aktuelle Wetter- oder Verkehrsinformationen zu erhalten und berücksichtigen zu können oder um die im Speicher D hinterlegte digitale Karte zu aktualisieren.

Fig. 2b zeigt das Fahrzeug-Bordsystem 2 in einer Funktion als Netzwerk-Router. Eine Netzwerkapplikation (IP-application, IP) A₃ bietet dabei dem Fahrzeug bzw. seinen Insassen Zugriff auf das Internet 10. Den Zugriff stellt die Netzwerkapplikation A₃ mithilfe des Mobilfunk-Kommunikationsmoduls M_{S2} über eine Mobilfunkverbindung 6 und das Mobilfunknetz 8 her. Die Netzwerkapplikation A₃ kann optional zu Authentisierungs- und/oder Bezahlzwecken auch einen Bezahldienst (Subscriber Identification Module, SIM) S₅ verwenden, z.B. eine elektronische Geldbörse, falls auf zahlungspflichtige externe Internet- oder Mobilfunk-Dienste zugegriffen werden soll oder solche, die eine Nutzeridentifizierung erfordern.

Die Fig. 2c bis 2i zeigen den Einsatz des Fahrzeug-Bordsystems 2 als Onboard-Unit (OBU) des Straßenmautsystems 13 in verschiedenen Ausführungsformen.

Fig. 2c zeigt die Realisierung einer sogenannten "thin-client" OBU. Eine Vermautungsapplikation (Tolling Service Application, TSA) A₂ des Fahrzeug-Bordsystems 2 verwendet den Ortungsdienst S₃ des Dienstmoduls M_{S3} zur Satellitenverortung, um sich selbst zu lokalisieren. Die Vermautungsapplikation A₂ leitet die so ermittelten rohen Ortsinformationen z.B. über das Mobilfunk-Dienstmodul M_{S2} an das Zentralsystem 14 des Straßenmautsystems 13 weiter, wo die Ortsinformationen z.B. anhand von digitalen Straßenkarten verbessert werden können und die Benützung mautpflichtiger Straßen 3 vergebührt wird.

Fig. 2d zeigt den Aufbau einer sogenannten "thick-client" OBU, bei welcher die Vermautungsapplikation A₂ die vom Ortungsdienst S₃ ermittelten Ortsinformationen mithilfe des Kartenabgleichs-Dienstmoduls M_{S4} selbst auswertet, daraus Mautbeträge errechnet und das Ergebnis der Vermautung als ortsanonymisierte Mautinformation z.B. über das Mobilfunk-Kommunikationsdienstmodul M_{S2} an das Zentralsystem 14 des Straßenmautsystems 13 sendet.

Fig. 2e zeigt eine Variante der selbst-lokalisierenden thin-client OBU aus Fig. 2c. Die Vermautungsapplikation A₂ sendet hier die mithilfe des Ortungsdienstes S₃ ermittelten Ortsinformationen über ein DSRC-Dienstmodul M_{S1}, z.B. einen DSRC-Sendeempfänger, oder ein WAVE-Dienstmodul (nicht dargestellt) an das Zentralsystem 14 des Straßenmautsystems 13.

Wie Fig. 2f zeigt, kann das Fahrzeug-Bordsystem 2 - alternativ zu den in den Fig. 2c bis 2f dargestellten Varianten von selbst-lokalisierenden OBUs - in der weiter oben erläuterten Weise mithilfe der Kurzreichweiten-Funkbaken 12 fremdverortet werden, wozu das Vermautungs-Applikationsmodul M_{A2} das DSRC-Dienstmodul M_{S1} (oder ein WAVE-Dienstmodul) in Anspruch nimmt.

Das Beispiel von Fig. 2g stellt eine OBU-Variante für Prepaid-Vermautung dar. Dabei verwendet das Vermautungs-Applikationsmodul M_{A2} zusätzlich den Bezahldienst S₅ des Dienstmoduls M_{S5}, um z.B. bei Eintritt in den Kurzreichweiten-Funkabdeckungsbereich einer Bake 12 einen vorgegebenen oder dabei kommunizierten Mautbetrag von einem im Dienstmodul M_{S5} gespeicherten Guthaben abzubuchen.

Auch könnte, wie in Fig. 2h dargestellt, das Vermautungs-Applikationsmodul M_{A2} einerseits das DSRC-Dienstmodul M_{S1} zur Selbstlokalisierung anhand eines Netzes geographisch verteilter DSRC-Funkbaken 12 verwenden, jedoch dann die Ortsinformationen selbst über das Mobilfunk-Dienstmodul M_{S2} an das Zentralsystem 14 des Straßenmautsystems 13 zur Abrechnung übermitteln.

Auch andere Varianten des Einsatzes des Fahrzeug-Bordsystems 2 als Vermautungs-OBU sind möglich. So kann z.B. eine thick-client OBU auch mit prepaid-Guthaben ausgestattet sein, das Vermautungs-Applikationsmodul M_{A2} beliebige Ortungs-, Kommunikations- und Rechen-Dienstmodule M_{S1}, M_{S2}, M_{S3}, M_{S4}, M_{S5} kombinieren und mit anderen Applikationsmodulen M_{A1}, M_{A3} teilen, usw. usf. Weitere Applikations- und Dienstmodule M_{Ai}, M_{Sj}, z.B. Motormanagement, Klimaregelung, können ebenso über den Kommunikationsbus C verbunden sein und Dienste Sⱼ miteinander teilen.

Es versteht sich, dass je nach den Erfordernissen einzelne Module M_{Ai}, M_{Sj} sowohl als Hardware-Module als auch als Software-Module aufgebaut sein können und mehrere Software-Module dabei, wenn gewünscht, auch in ein und derselben physischen Recheneinheit ablaufen könnten. Auch könnten die Module M_{Ai}, M_{Sj} weiter verfeinert bzw. hierarchisch untergliedert sein.

Das Fahrzeug-Bordsystem 2 führt die Applikationen Aᵢ und Dienste Sⱼ im Allgemeinen zueinander zeitlich parallel aus, soweit dies erforderlich oder gewünscht ist. Anforderungs- und Antwortnachrichten nᵢⱼ, nⱼᵢ werden dabei zeitlich aufeinanderfolgend über den Kommunikationsbus C gesendet. Um die Arbeitsweise der Applikations- und Dienstmodule M_{Ai}, M_{Sj} dokumentieren, überprüfen, validieren und/oder zertifizieren zu können, dient die nun folgende, anhand von Fig. 2i erläuterte Erweiterung des Systems.

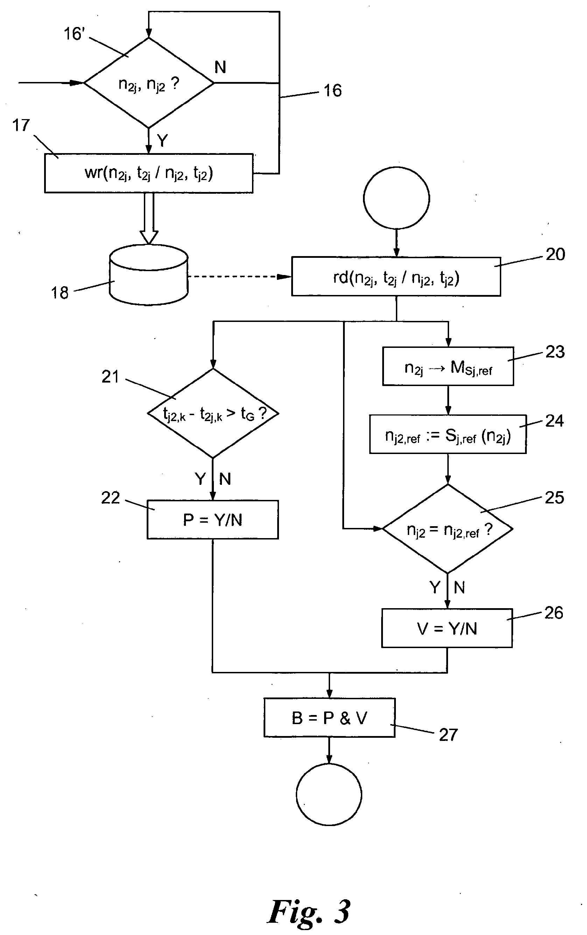

Gemäß Fig. 2i ist an den Kommunikationsbus C des Fahrzeug-Bordsystems 2 ein gemeinsames Aufzeichnungsmodul M_{A4} angeschlossen. In dem in Fig. 2i gezeigten Beispiel protokolliert das Aufzeichnungsmodul M_{A4} alle von der Vermautungsapplikation A₂ in Anspruch genommenen Dienste Sⱼ. Fig. 3 zeigt das Flussdiagramm der im Aufzeichnungsmodul M_{A4} ablaufenden Aufzeichnungsapplikation A₄.

In einer Schleife 16 hört das Aufzeichnungsmodul M_{A4} am Kommunikationsbus C mit. Detektiert das Aufzeichnungsmodul M_{A4} dabei eine vom ersten Applikationsmodul M_{A2} an ein Dienstmodul M_{Sj} adressierte Anforderungsnachricht n₂ⱼ oder eine von diesem retournierte Antwortnachricht nⱼ₂ anhand der darin jeweils enthaltenen Busadressen (Zweig "Y" der Entscheidung 16'), so versieht es die detektierte Nachricht n₂ⱼ, nⱼ₂ in Schritt 17 mit einem aktuellen Zeitstempel t₂ⱼ, tⱼ₂ und zeichnet sie in einem Speicher 18 auf. Die aufgezeichneten Nachrichten n₂ⱼ, nⱼ₂ können dabei auch jeweils darin übergebene Parameter bzw. Daten, z.B. Befehls- oder Ergebnisparameter bzw. -daten enthalten, wie zuvor erörtert.

Das Aufzeichnungsmodul M_{A4} kann dafür ausgebildet sein, die detektierten Nachrichten n₂ⱼ, nⱼ₂ und die zugehörigen Zeitstempel t₂ⱼ, tⱼ₂ mit einer digitalen Signatur zu versehen und solcherart signiert im Speicher 18 abzulegen. Das Aufzeichnungsmodul M_{A4} kann beispielsweise eine Smart-Card sein, welche eine kryptographische Signatur enthält oder bildet und zusammen mit ihrem Speicher 18 (oder dieser alleine) - in der Art eines "trusted element" - kryptographisch zugangsgesichert sein kann. Alternativ oder zusätzlich kann das Aufzeichnungsmodul M_{A4} und/oder sein Speicher 18 auch physisch zugangsgesichert sein, z.B. einen verkapselten Aufbau haben, wie es beispielsweise auf dem Gebiet von SIM-Karten für Mobiltelefone bekannt ist.

Das Aufzeichnungsmodul M_{A4} kann - in der gleichen Weise wie die anderen Applikationsmodule M_{Ai} - an den Kommunikationsbus C angeschlossen sein und die Nachrichten n₂ⱼ, nⱼ₂ auf dem Kommunikationsbus C anhand der interessierenden Busadressen detektieren und dabei erfassen, wie durch die Bus-Sonde 18' angedeutet. Alternativ kann das Aufzeichnungsmodul M_{A4} auch zwischen das Aufzeichnungsmodul M_{A2} mit der Vermautungsapplikation A₂ und den Kommunikations- bus C zwischengeschaltet sein, wie strichliert bei 18" angedeutet, und die vom und zum Vermautungs-Applikationsmodul M_{A2} gesandten Anforderungs- und Antwortnachrichten n₂ⱼ, nⱼ₂ durchleiten (routen) bzw. passieren lassen und dabei die Nachrichten zur genannten Aufzeichnung im Speicher 18 erfassen.

Anhand der Aufzeichnungen im Speicher 18 des Aufzeichnungsmoduls M_{A4} ist ein Prüfen, Validieren bzw. Zertifizieren des Fahrzeug-Bordsystems 2 bzw. der Module und Dienste darin möglich. Dazu greift ein vom Fahrzeug-Bordsystem 2 unabhängiges Prüfsystem (Performance Validation Proxy, PVP) 19 auf die Aufzeichnungen im Speicher 18 zumindest temporär zu, z.B. bei einem Werkstattaufenthalt des Fahrzeugs 1. Der Speicher 18 könnte zu diesem Zweck entnehmbar sein, oder das Aufzeichnungsmodul M_{A4} könnte einen Anschluss für das Prüfsystem 19 haben. Alternativ könnten auf Anforderung des Prüfsystems 19 oder des Aufzeichnungsmoduls M_{A4} die Aufzeichnungen des Speichers 18 auch im laufenden Betrieb des Fahrzeugs 1 z.B. über das Aufzeichnungsmodul M_{A4}, den Kommunikationsbus C und eines der Kommunikations-Dienstmodule M_{S1}, M_{S2} od. dgl. an das Prüfsystem 19 gesendet und dort nach einem der im Folgenden erläuterten Prüfverfahren geprüft werden.

Im einfachsten Fall kann das Prüfverfahren im Prüfsystem 19 darin bestehen, dass die Antwortnachrichten nⱼ₂ lediglich in Bezug auf ihren Inhalt analysiert werden, insbesondere wenn sie selbst einen Leistungsreport des jeweiligen Dienstmoduls M_{Sj} enthalten, z.B. über die zur Ausführung des Dienstes Sⱼ im Dienstmodul M_{Sj} benötigte Speichergröße, Rechenzeit, Anzahl an Rechenkernen, über Qualitätsmaße der Ergebnisdaten, z.B. die Genauigkeitsangaben eines Ortungsdienstes od.dgl. Solche Leistungsreport-Daten eines Dienstmoduls M_{Sj} können beispielsweise auf die Einhaltung vorgegebener Grenzwerte überwacht werden, um das Fahrzeug-Bordsystem 2, seine Module und Dienste zu validieren bzw. zu zertifizieren. Ferner kann der Inhalt der Antwortnachrichten nⱼ₂ auch mit jenen von anderen Dienstmodulen M_{Sj} verglichen werden, um z.B. Plausibilisierungen der Daten durchführen zu können.

In einer bevorzugten Ausführungsform führt das Prüfsystem 19 eigene Leistungsüberprüfungen durch, wie nachstehend beschrieben.

Das Prüfverfahren startet dazu in Schritt 20, wo das Prüfsystem 19 eine Anforderungsnachricht n₂ⱼ und eine zugehörige Antwortnachricht nⱼ₂ mitsamt deren jeweiligen Zeitstempeln t₂ⱼ, tⱼ₂ aus dem Speicher 18 ausliest. In einer ersten Variante des Prüfverfahrens wird danach zu Schritt 21 verzweigt, in welchem geprüft wird, ob die Differenz der ausgelesenen Zeitstempel t₂ⱼ, tⱼ₂ einen vorgegebenen Grenzwert t_{G} überschreitet, worauf das Ergebnis dieser Prüfung in Schritt 22 als Prüfergebnis P bereitgestellt wird.

Gemäß einer zu den Schritten 20 und 21 alternativen oder ergänzenden Variante des Prüfverfahrens wird nach Schritt 20 zu Schritt 23 verzweigt, in welchem die ausgelesene Anforderungsnachricht n₂ⱼ zur Ausführung des darin ausgewählten Dienstes Sⱼ an ein Referenz-Dienstmodul M_{Sj},_{ref} (Fig. 2i) des Prüfsystems 19 gesandt wird, das den Dienst Sⱼ des zu prüfenden Dienstmoduls M_{Sj} des Bordsystems 2 in einer davon unabhängigen, zertifizierten Umgebung emuliert, d.h. als Referenz-Dienst S_{j,ref} ausführt, und daraufhin in Schritt 24 eine Referenz-Antwortnachricht n_{j2,ref} retourniert. In einem folgenden Schritt 25 wird die ausgelesene Antwortnachricht nⱼ₂ mit der Referenz-Antwortnachricht n_{j2,ref} verglichen und das Ergebnis in Schritt 26 als Vergleichsergebnis V bereitgestellt.

Optional können das Prüfergebnis P und das Vergleichsergebnis V zu einem Bewertungsergebnis B verknüpft werden (Schritt 27). Die Ergebnisse P, V, B des Prüfverfahrens nach Fig. 3 können dann verwendet werden, um das geprüfte Dienstmodul M_{Sj} und/oder das anfordernde Applikationsmodul M_{Ai} zu validieren bzw. bei unzureichenden Ergebnissen P, V, B nicht zu validieren. Wenn das Aufzeichnungsmodul M_{A4} die Aufzeichnungen in Schritt 17 mit einer Signatur versehen hat, kann das Prüfsystem 19 ferner die Signatur der aus dem Speicher 18 ausgelesenen Anforderungs- und Antwortnachrichten n₂ⱼ, nⱼ₂ auf Echtheit prüfen und das Ergebnis zur weiteren Berücksichtigung bereitstellen.

Die Erfindung ist nicht auf die dargestellten Ausführungsformen beschränkt, sondern umfasst alle Varianten, Kombinationen und Modifikationen, die in den Rahmen der angeschlossenen Ansprüche fallen. So könnte das Aufzeichnungsmodul M_{A4} auch Anforderungs- und Antwortnachrichten nᵢⱼ, nⱼᵢ anderer Applikationsmodule M_{Ai} als des Vermautungs-Applikationsmoduls M_{A2} jeweils mit einem aktuellen Zeitstempel tᵢⱼ, tⱼᵢ versehen im Speicher 18 aufzeichnen, woraufhin das Prüfsystem 19 sein Prüfverfahren auf beliebige Module M_{Ai}, M_{Sj} anwenden könnte.

## Patentansprüche

1. Verfahren zum Prüfen eines Fahrzeug-Bordsystems mithilfe eines davon unabhängigen Prüfsystems (19),
welches Fahrzeug-Bordsystem (2) eine Mehrzahl von Modulen (M_{Ai}, M_{Sj}) hat, die über einen Kommunikationsbus (C) miteinander in Verbindung stehen und eindeutig adressierbar sind, wobei die Module (M_{Ai}, M_{Sj}) eine erste Gruppe (G_{A}) von zumindest zwei Applikationsmodulen (M_{Ai}) zum Ausführen unterschiedlicher Applikationen (Aᵢ) und eine zweite Gruppe (G_{S}) von zumindest zwei Dienstmodulen (M_{Sj}) zum Ausführen unterschiedlicher Dienste (Sⱼ) bilden, wobei jedes Applikationsmodul (M_{Ai}) dafür ausgebildet ist, eine Anforderungsnachricht (nᵢⱼ) zur Dienstausführung über den Kommunikationsbus (C) an ein ausgewähltes Dienstmodul (M_{Sj}) zu adressieren, und jedes Dienstmodul (M_{Sj}) dafür ausgebildet ist, nach einer Dienstausführung eine Antwortnachricht (nⱼᵢ) über den Kommunikationsbus (C) an ein anforderndes Applikationsmodul (M_{Ai}) zu retournieren, wobei zumindest ein Applikationsmodul (M_{Ai}) eine Vermautungsapplikation (A₂) enthält und zumindest ein Dienstmodul (M_{Sj}) einen Kommunikationsdienst (S₁, S₂) enthält, wobei sich die beiden Applikationsmodule (M_{Ai}) zumindest eines der beiden Dienstmodule (M_{Sj}) teilen, indem sie Anforderungsnachrichten (nᵢⱼ) an ein und dasselbe Dienstmodul (M_{Sj}) adressieren, und wobei das Fahrzeug-Bordsystem (2) ferner ein Aufzeichnungsmodul (M_{A4}) enthält, welches dafür ausgebildet ist, vom ersten Applikationsmodul (M_{A2}) während des Fahrzeugbetriebs an ein Dienstmodul (M_{Sj}) adressierte Anforderungsnachrichten (n₂ⱼ) und von diesem während des Fahrzeugbetriebs retournierte Antwortnachrichten (nⱼ₂) zu erfassen und jeweils mit einem aktuellen Zeitstempel (t₂ⱼ, tⱼ₂) versehen in einem Speicher (18) von einem vom Fahrzeug-Bordsystem (2) unabhängigen Prüfsystem zum Prüfen auslesbar aufzuzeichnen, und
welches Prüfsystem (19) einen zumindest temporären Zugriff auf den Speicher (18) des Aufzeichnungsmoduls (M_{A4}) hat, umfassend die Schritte:
Auslesen (20) einer Anforderungsnachricht (n₂ⱼ) und einer zugehörigen Antwortnachricht (nⱼ₂), die jeweils im Fahrzeugbetrieb erfasst werden, mitsamt ihren jeweiligen Zeitstempeln (t₂ⱼ, tⱼ₂) aus dem Speicher (18),
Prüfen (21), ob die Differenz der ausgelesenen Zeitstempel (t₂ⱼ, tⱼ₂) einen vorgegebenen Grenzwert (t_{G}) überschreitet, und Bereitstellen (22) des Prüfergebnisses (P).

2. Verfahren zum Prüfen eines Fahrzeug-Bordsystems mithilfe eines davon unabhängigen Prüfsystems (19),
welches Fahrzeug-Bordsystem (2) eine Mehrzahl von Modulen (M_{Ai}, M_{Sj}) hat, die über einen Kommunikationsbus (C) miteinander in Verbindung stehen und eindeutig adressierbar sind, wobei die Module (M_{Ai}, M_{Sj}) eine erste Gruppe (G_{A}) von zumindest zwei Applikationsmodulen (M_{Ai}) zum Ausführen unterschiedlicher Applikationen (Aᵢ) und eine zweite Gruppe (G_{S}) von zumindest zwei Dienstmodulen (M_{Sj}) zum Ausführen unterschiedlicher Dienste (Sⱼ) bilden, wobei jedes Applikationsmodul (M_{Ai}) dafür ausgebildet ist, eine Anforderungsnachricht (nᵢⱼ) zur Dienstausführung über den Kommunikationsbus (C) an ein ausgewähltes Dienstmodul (M_{Sj}) zu adressieren, und jedes Dienstmodul (M_{Sj}) dafür ausgebildet ist, nach einer Dienstausführung eine Antwortnachricht (nⱼᵢ) über den Kommunikationsbus (C) an ein anforderndes Applikationsmodul (M_{Ai}) zu retournieren, wobei zumindest ein Applikationsmodul (M_{Ai}) eine Vermautungsapplikation (A₂) enthält und zumindest ein Dienstmodul (M_{Sj}) einen Kommunikationsdienst (S₁, S₂) enthält, wobei sich die beiden Applikationsmodule (M_{Ai}) zumindest eines der beiden Dienstmodule (M_{Sj}) teilen, indem sie Anforderungsnachrichten (nᵢⱼ) an ein und dasselbe Dienstmodul (M_{Sj}) adressieren, und wobei das Fahrzeug-Bordsystem (2) ferner ein Aufzeichnungsmodul (M_{A4}) enthält, welches dafür ausgebildet ist, vom ersten Applikationsmodul (M_{A2}) während des Fahrzeugbetriebs an ein Dienstmodul (M_{Sj}) adressierte Anforderungsnachrichten (n₂ⱼ) und von diesem während des Fahrzeugbetriebs retournierte Antwortnachrichten (nⱼ₂) zu erfassen und jeweils mit einem aktuellen Zeitstempel (t₂ⱼ, tⱼ₂) versehen in einem Speicher (18) von einem vom Fahrzeug-Bordsystem (2) unabhängigen Prüfsystem zum Prüfen auslesbar aufzuzeichnen, und
welches Prüfsystem (19)einen zumindest temporären Zugriff auf den Speicher (18) des Aufzeichnungsmoduls (M_{A4}) und zumindest ein Referenz-Dienstmodul (M_{Sj,ref}) zum Ausführen des Dienstes (Sⱼ) eines zu prüfenden Dienstmoduls (M_{Sj}) des Fahrzeug-Bordsystems (2) hat, umfassend die Schritte:
Auslesen (20) einer an das zu prüfende Dienstmodul (M_{Sj}) adressierten Anforderungsnachricht (n₂ⱼ) und der zugehörigen Antwortnachricht (nⱼ₂) aus dem Speicher (18),
Senden (23) der ausgelesenen Anforderungsnachricht (n₂ⱼ) zur Dienstausführung an das Referenz-Dienstmodul (M_{Sj,ref}) und Empfangen (24) einer diesbezüglich retournierten Referenz-Antwortnachricht (n_{j2,ref}) des Referenz-Dienstmoduls (M_{Sj,ref}),
Vergleichen (25) der ausgelesenen Antwortnachricht (nⱼ₂) mit der Referenz-Antwortnachricht (n_{j2,ref}) und Bereitstellen (26) des Vergleichsergebnisses (V).

3. Verfahren nach den Ansprüchen 1 und 2, **dadurch gekennzeichnet, dass** das Prüfergebnis (P) und das Vergleichsergebnis (V) zu einem Bewertungsergebnis (B) verknüpft werden.

4. Verfahren nach einem der Ansprüche 1 bis 3, wobei das Aufzeichnungsmodul (M_{A4}) dazu ausgebildet ist, die Aufzeichnungen mit einer Signatur zu versehen, **dadurch gekennzeichnet, dass** ferner die Signatur der aus dem Speicher (18) ausgelesenen Anforderungs- und Antwortnachrichten (n₂ⱼ, nⱼ₂) auf Echtheit geprüft wird.

5. Verfahren nach einem der Ansprüche 1 bis 4, **dadurch gekennzeichnet, dass** das genannte Auslesen des Speicherinhalts durch drahtloses Senden des Speicherinhalts vom Fahrzeug-Bordsystem (2) an das Prüfsystem (19) erfolgt.

## Claims

1. Method for verifying a vehicle onboard-system by means of an inspection system (19) independent therefrom,
which vehicle onboard-system (2) has a plurality of modules (M_{Ai}, M_{Sj}) which are connected to each other via a communication bus (C) and are uniquely addressable, wherein the modules (M_{Ai}, M_{Sj}) constitute a first group (G_{A}) of at least two application modules (M_{Ai}) for executing different applications (Aᵢ) and a second group (G_{S}) of at least two service modules (M_{Sj}) for executing different services (Sⱼ), wherein each application module (M_{Ai}) is configured to address a request message (nᵢⱼ), for executing a service, via the communication bus (C) to a chosen service module (M_{Sj}), and each service module (M_{Sj}) is configured to return, after executing a service, a response message (nⱼᵢ) via the communication bus (C) to a requesting application module (M_{Ai}), wherein at least one application module (M_{Ai}) comprises a tolling application (A₂), and at least one service module (M_{Sj}) comprises a communication service (S₁, S₂), wherein the two application modules (M_{Ai}) share at least one of the two service modules (M_{Sj}) by addressing request messages (nᵢⱼ) to one and the same service module (M_{Sj}), and wherein the vehicle onboard-system (2) further comprises a recording module (M_{A4}) configured to register request messages (n₂ⱼ) addressed by the first application module (M_{A2}) during operation of the vehicle to a service module (M_{Sj}), to register response messages (nⱼ₂) returned by the latter during operation of the vehicle, and to record them in a memory (18), each provided with a current time stamp (t₂ⱼ, tⱼ₂), so that they can be read-out by an inspection system independent from the vehicle onboard-system to verify them, and
which inspection system (19) has an at least temporary access to the memory (18) of the recording module (M_{A4}), comprising the steps:
reading-out (20) a request message (n₂ⱼ) and a corresponding response message (nⱼ₂), which are each registered during vehicle operation, together with their corresponding time stamps (t₂ⱼ, tⱼ₂) from the memory (18),
checking (21) if the difference of the read-out time stamps (t₂ⱼ, tⱼ₂) exceeds a predetermined threshold (t_{G}), and providing (22) the checking result (P).

2. Method for verifying a vehicle onboard-system by means of an inspection system (19) independent therefrom,
which vehicle onboard-system (2) has a plurality of modules (M_{Ai}, M_{Sj}) which are connected to each other via a communication bus (C) and are uniquely addressable, wherein the modules (M_{Ai}, M_{Sj}) constitute a first group (G_{A}) of at least two application modules (M_{Ai}) for executing different applications (Aᵢ) and a second group (G_{S}) of at least two service modules (M_{Sj}) for executing different services (Sⱼ), wherein each application module (M_{Ai}) is configured to address a request message (nᵢⱼ), for executing a service, via the communication bus (C) to a chosen service module (M_{Sj}), and each service module (M_{Sj}) is configured to return, after executing a service, a response message (nⱼᵢ) via the communication bus (C) to a requesting application module (M_{Ai}), wherein at least one application module (M_{Ai}) comprises a tolling application (A₂), and at least one service module (M_{Sj}) comprises a communication service (S₁, S₂), wherein the two application modules (M_{Ai}) share at least one of the two service modules (M_{Sj}) by addressing request messages (nᵢⱼ) to one and the same service module (Mₛⱼ), and wherein the vehicle onboard-system (2) further comprises a recording module (M_{A4}) configured to register request messages (n₂ⱼ) addressed by the first application module (M_{A2}) during operation of the vehicle to a service module (M_{Sj}), to register response messages (nⱼ₂) returned by the latter during operation of the vehicle, and to record them in a memory (18), each provided with a current time stamp (t₂ⱼ, tⱼ₂) so that they can be read-out by an inspection system independent from the vehicle onboard-system to verify them, and
which inspection system (19) has an at least temporary access to the memory (18) of the recording module (M_{A4}) and at least a reference service module (M_{Sj,ref}) for executing the service (Sⱼ) of a service module (M_{Sj}) to be verified of the vehicle onboard-system, comprising the steps:
reading-out (20) of a request message (n₂ⱼ) addressed to the service module (M_{Sj}) to be verified and of the corresponding response message (nⱼ₂) from the memory (18),
sending (23) the read-out request message (n₂ⱼ) for executing the service to the reference service module (M_{Sj,ref}) and receiving (24) a correspondingly returned reference response message (n_{j2,ref}) of the reference service module (M_{Sj,ref}),
comparing (25) the read-out response message (nⱼ₂) to the reference response message (n_{j2,ref}), and providing the comparison result (V).

3. Method according to claims 1 and 2, **characterised in that** the checking result (P) and the comparison result (V) are combined to an evaluation result (B).

4. Method according to any one of the claims 1 to 3, wherein the recording module (M_{A4}) is configured to provide the records with a signature, **characterised in that** the signature of the request and response messages (n₂ⱼ, nⱼ₂) read-out from the memory (18) are further checked for authenticity.

5. Method according to any one of the claims 1 to 4, **characterised in that** said reading-out of the memory content is carried out by wirelessly sending the memory content from the vehicle onboard-system (2) to the inspection system (19).

## Revendications

1. Procédé pour le contrôle d'un système embarqué véhicule, à l'aide d'un système de contrôle (19) indépendant de celui-ci,
lequel système embarqué véhicule (2) a une pluralité de modules (M_{Ai}, M_{Sj}) reliés entre eux par le biais d'un bus de communication (C) et adressables de façon univoque, dans lequel les modules (M_{Ai}, M_{Sj}) forment un premier groupe (G_{A}) d'au moins deux modules d'application (M_{Ai}) pour l'exécution de différentes applications (Aᵢ) et un deuxième groupe (G_{S}) d'au moins deux modules de service (M_{Sj}) pour l'exécution de différents services (Sⱼ), dans lequel chaque module d'application (M_{Ai}) est conçu pour adresser un message de demande (nᵢⱼ) pour l'exécution d'un service à un module de service (M_{Sj}) sélectionné par le biais du bus de communication (C), et chaque module de service (M_{Sj}) est conçu pour renvoyer un message de réponse (nⱼᵢ) au module d'application (M_{Ai}) demandeur, suite à une exécution de service, par le biais du bus de communication (C), dans lequel au moins un module d'application (M_{Ai}) contient une application de péage (A₂) et au moins un module de service (M_{Sj}) contient un service de communication (S₁, S₂), dans lequel les deux modules d'application (M_{Ai}) se partagent au moins l'un des deux modules de service (M_{Sj}), en adressant des messages de demande (nᵢⱼ) à un seul et même module de service (M_{Sj}), et dans lequel le système embarqué véhicule (2) contient en outre un module d'enregistrement (M_{A4}) conçu pour enregistrer des messages de demande (n₂ⱼ) adressés par le premier module d'application (M_{A2}) pendant l'opération du véhicule à un module de service (M_{Sj}), et pour enregistrer des messages de réponse (nⱼᵢ) renvoyés par celui-ci pendant l'opération du véhicule, et pour les enregistrer respectivement dans une mémoire (18), avec un horodatage (t₂ⱼ, tⱼ₂) actuel, de façon lisible par un système de contrôle indépendant du système embarqué véhicule (2), afin de les contrôler, et
lequel système de contrôle (19) a un accès au moins temporaire à la mémoire (18) du module d'enregistrement (M_{A4}), comprenant les étapes suivantes :
lecture (20) d'un message de demande (n₂ⱼ) et d'un message de réponse (nⱼ₂) correspondant respectivement enregistrés pendant l'opération du véhicule, ensemble avec leurs horodatages (t₂ⱼ, tⱼ₂) respectifs, à partir de la mémoire (18),
contrôle (21) de la différence entre les horodatage (t₂ⱼ, tⱼ₂) lus quant au dépassement d'une valeur seuil (t_{G}) prédéfinie, et mise à disposition du résultat de contrôle (P) .

2. Procédé pour le contrôle d'un système embarqué véhicule, à l'aide d'un système de contrôle (19) indépendant de celui-ci,
lequel système embarqué véhicule (2) a une pluralité de modules (M_{Ai}, M_{Sj}) reliés entre eux par le biais d'un bus de communication (C) et adressables de façon univoque, dans lequel les modules (M_{Ai}, M_{Sj}) forment un premier groupe (G_{A}) d'au moins deux modules d'application (M_{Ai}) pour l'exécution de différentes applications (Aᵢ) et un deuxième groupe (G_{S}) d'au moins deux modules de service (M_{Sj}) pour l'exécution de différents services (Sⱼ), dans lequel chaque module d'application (M_{Ai}) est conçu pour adresser un message de demande (nᵢⱼ) pour l'exécution d'un service à un module de service (M_{Sj}) sélectionné par le biais du bus de communication (C), et chaque module de service (M_{Sj}) est conçu pour renvoyer un message de réponse (nⱼᵢ) au module d'application (M_{Ai}) demandeur, suite à une exécution de service, par le biais du bus de communication (C), dans lequel au moins un module d'application (M_{Ai}) contient une application de péage (A₂) et au moins un module de service (M_{Sj}) contient un service de communication (S₁, S₂), dans lequel les deux modules d'application (M_{Ai}) se partagent au moins l'un des deux modules de service (M_{Sj}), en adressant des messages de demande (ₙᵢⱼ) à un seul et même module de service (M_{Sj}), et dans lequel le système embarqué véhicule (2) contient en outre un module d'enregistrement (M_{A4}) conçu pour enregistrer des messages de demande (n₂ⱼ) adressés par le premier module d'application (M_{A2}) pendant l'opération du véhicule à un module de service (M_{Sj}), et pour enregistrer des messages de réponse (nⱼᵢ) renvoyés par celui-ci pendant l'opération du véhicule, et pour les enregistrer respectivement dans une mémoire (18), avec un horodatage (t₂ⱼ, tⱼ₂) actuel, de façon lisible par un système de contrôle indépendant du système embarqué véhicule (2), afin de les contrôler, et
lequel système de contrôle (19) a un accès au moins temporaire à la mémoire (18) du module d'enregistrement (M_{A4}) et au moins un module de service de référence (M_{Sj, ref}) pour l'exécution du service (Sⱼ) d'un module de service (M_{Sj}) à contrôler du système embarqué véhicule (2), comprenant les étapes suivantes :
lecture (20) d'un message de demande (n₂ⱼ) adressé au module de service (M_{Sj}) à contrôler et du message de réponse (nⱼ₂) correspondant, à partir de la mémoire (18),
envoi (23) du message de demande (n₂ⱼ) lu au module de service de référence (M_{Sj, ref}) en vue de l'exécution de service, et réception (24) d'un message de réponse de référence (n_{j2, ref}) renvoyé à ce sujet, venant du module de service de référence (M_{Sj, ref}),
comparaison (25) entre le message de réponse (nⱼ₂) lu et le message de réponse de référence (n_{j2, ref}) et mise à disposition (26) du résultat de comparaison (V).

3. Procédé selon les revendications 1 et 2, **caractérisé en ce que** le résultat de contrôle (P) et le résultat de comparaison (V) sont combinés dans un résultat d'évaluation (B).

4. Procédé selon l'une des revendications 1 à 3, dans lequel le module d'enregistrement (M_{A4}) est en outre conçu pour doter les enregistrements d'une signature, **caractérisé en ce que** la signature des messages de demande et de réponse (n₂ⱼ, nⱼ₂) lus à partir de la mémoire (18) sont contrôlés quant à leur authenticité.

5. Procédé selon l'une des revendications 1 à 4, **caractérisé en ce que** ladite lecture du contenu de la mémoire est effectuée par envoi sans fil du contenu de la mémoire du système embarqué véhicule (2) au système de contrôle (19).
